# EUROPEAN PATENT SPECIFICATION

(11) **EP 0 879 490 B1**
(45) Date of publication and mention of the grant of the patent: **07.11.2001**
(21) Application number: 97904690.1
(22) Date of filing: 23.01.1997
(51) Int. Cl.: H01R 12/22, H01R 12/04, H04M 1/03

(54) **CONNECTOR FOR AN ELECTROACOUSTIC TRANSDUCER**
VERBINDER FUER ELEKTROAKUSTISCHER WANDLER
CONNECTEUR POUR TRANSDUCTEUR ELECTROACOUSTIQUE

(30) Priority: 07.02.1996 SE 9600445
(43) Date of publication of application: 25.11.1998
(73) Proprietor: TELEFONAKTIEBOLAGET L M ERICSSON (publ), 126 25 Stockholm (SE)
(72) Inventor: BRODIN, Malte, Bengt, Gustav, S-214 38 Malmö (SE)
(74) Representative: Petri, Stellan
(86) International application number: SE9700105
(87) International publication number: WO9729528

(56) References cited:
- EP-A- 0 260 523
- EP-A- 0 402 739
- EP-A- 0 490 214
- EP-A- 0 567 850
- US-A- 4 937 858

## Description

### Technical Field

The present invention relates to a connector for electrically connecting an electroacoustic transducer to electric circuits on a printed circuit board in a sound reproducing and/or sound recording device.

### Description of the Prior Art

A well known example of such sound reproducing and/or sound recording devices is a radio telephone. Radio telephones, e.g. cellular telephones for use in cellular telecommunications systems such as GSM (Global System for Mobile Service), comprise at least one microphone and at least one loudspeaker, both of which may be described as electroacoustic transducers for converting an electric signal into an acoustic signal, or vice versa.

In addition to such electroacoustic transducers the radio telephones of today obviously have a variety of electric or electronic circuits or components implementing or realizing the functions of the radio telephone. Such circuits or components are for instance the modulator, local oscillator, clock signal generator, mixer, amplifier, various filter circuits, processor (CPU) with its memories, etc. These circuits are normally arranged on a printed circuit board (PCB). The printed circuit board is often made from glass fiber epoxy provided with copper-based conductors, and it may be manufactured according to the following process:
1. Stencil printing of solder paste onto the circuit board.
2. Mounting of the electric and electronic components in the solder paste.
3. Treatment in a hot-air furnace at a temperature of about 210°C - 270°C, wherein the components are soldered to the circuit board at intended locations.

When the acoustic components (the loudspeaker and the microphone) are connected as described above to the radio telephone circuitry on the printed circuit board, some considerations have to be made. Both the loudspeaker and the microphone are sensible to high temperatures and should consequently not be present on the printed circuit board during the soldering process described above. Quite simply, the acoustic components would be destroyed at such high temperatures, which are required for melting the solder paste. Normally a loudspeaker or a microphone can only resist temperatures of about 100°C maximum, and hence these components must be mounted separately to the normal manufacturing process according to the above.

Furthermore, strict regulations are laid upon the acoustic components by the authorities, for instance when it comes to frequency characteristics requirements. Obviously, the acoustic components are also subject to market demands, such as a high-quality speech recognition ability. For practical reasons there is provided a space between the acoustic component and the radio telephone chassis, which gives rise to an acoustic impedance with respect to the surrounding environment, and this impedance must be strictly controlled so as to fulfil the demands above. For this reason the loudspeaker/microphone is preferably always mounted at the same position in relation to the chassis.

Hence, in the radio telephones of today, the acoustic components are normally firmly arranged on the inside of a chassis front portion, while the printed circuit board, together with the electric or electronic circuitry provided thereon, is mounted inside a chassis rear portion. The acoustic components are usually connected to the printed circuit board by soldering two metal wires between each respective acoustic component and the printed circuit board. However, such soldering has the disadvantage of being difficult to automatize, since the soldering must be made manually in this case. Consequently, the production speed as well as the cost efficiency is reduced. For facilitating the soldering the metal wires must have a certain length, and when the front portion and the rear portion are finally assembled, any of the metal wires may be squeezed between mechanical parts at the risk of a broken wire or soldering.

Such a fixed interconnection between an acoustic component arranged in a front portion and a printed circuit board arranged in a rear portion furthermore has the drawback of requiring the fixed interconnection to be broken, should the front portion need to be separated from the rear portion, when the radio telephone is repaired or given service.

From the European patent publication EP-A-0 567 850 it is known to provide an electric connection between a loudspeaker and a printed circuit board in an electric device by means of contact springs soldered to the circuit board. Each contact spring is designed to receive and engage a respective loudspeaker connecting pin. A similar arrangement is disclosed in the European patent publication EP-A-0 490 214, wherein contact springs are mounted to a respective loudspeaker connecting pin and are arranged to be applied by spring force against the circuit board so as to provide the desired electric connection. Contact arrangements of this kind eliminate the need for a directly soldered interconnection between the loudspeaker and the circuit board. However, due to the advanced design thereof the contact devices may be difficult to use in a highly automatized assembly process. Additionally, this is not the most cost-efficient solution, since one contact device is required for each loudspeaker connecting pin.

EP-B-0 402 739 discloses a connector for electrically connecting electric assemblies, comprising a connector body of an electrically isolating material, a lower elongated contact element to be inserted through an opening in a printed circuit board and which therefore extends in a direction perpendicular to a bottom surface of the connector body, and an upper, resilient, elongated connecting element, which is arranged in parallel to an upper surface of the connector body and is movable in a vertical direction. According to one embodiment of the connector shown in EP-B-0 402 739, the connector may be provided with more than one lower contact element and upper connecting element, respectively.

### Summary of the Invention

The object of the present invention is to overcome the problems encountered as described above, when an electroacoustic transducer is to be electrically connected to a printed circuit board in a sound reproducing and/or sound recording device, for instance a radio telephone. The object is achieved by a connector as defined by claim 1, which has a strong temperature resistance and hence may be soldered onto the printed circuit board already at the time of manufacture thereof, is provided with resilient means for connection to an electroacoustic transducer in the sound reproducing and/or sound recording device, and exhibits excellent connection margins in all important directions, thanks to its design according to the appended patent claims. Furthermore, the invention relates to a method of assembling a radio telephone using said connector as defined by claims 4.

### Brief Description of the Drawings

The invention will be described in more detail in the following, reference being made to the accompanying drawings, in which:
FIG 1 is a schematic side view of the connector according to the invention, when used for electrically connecting a loudspeaker to a printed circuit board in an exemplary radio telephone,
FIG 2 is a top view of the components according to FIG 1,
FIG 3 is a schematic and enlarged side view of a connector according to a preferred embodiment of the invention,
FIG 4 is an end view of the connector shown in FIG 3, and
FIG 5 is a top view of the connector shown in FIGs 3 and 4.

### Detailed Disclosure of the Invention

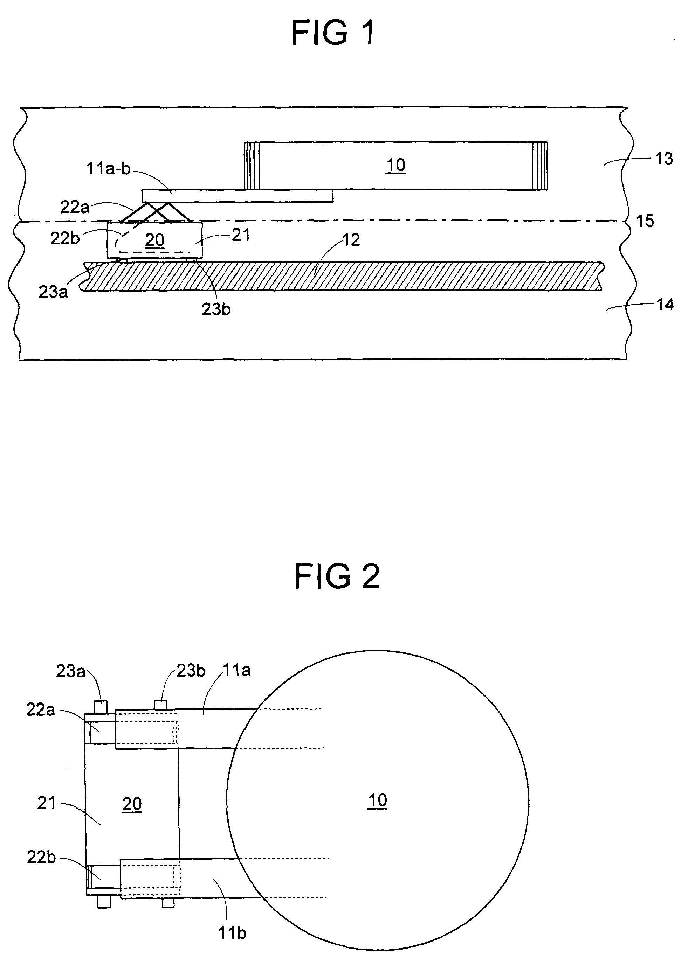

FIGs 1 and 2 provide a schematic view of a connector 20 according to the invention, when used for electric connection of an electroacoustic transducer to an electric printed circuit board in a radio telephone. As an example of an electroacoustic transducer such a conventional loudspeaker 10 has been selected, which is used in e.g. portable telephones for cellular telecommunications systems, such as GSM. However, it is to be understood that the invention is applicable to all such sound reproducing and/or sound recording devices, which comprise an electric printed circuit board to be connected to an electroacoustic transducer. Examples of such devices are pocket-size tape recorders, dictating machines, small radio devices, etc.

The loudspeaker 10 is firmly mounted to the inside of a front portion 13 of the radio telephone chassis. Preferably, the fixing of the loudspeaker 10 to the front portion 13 is made during a separate process in accordance with well-known fixing or mounting methods, such as gluing. The front portion is designed in a conventional way for reception of the loudspeaker 10 and is preferably provided with holes or slots, through which acoustic sound waves emitted from the loudspeaker may be radiated to the surroundings. The design of the front portion 13, as well as the fitting of the loudspeaker 10 in the front portion, may be done at a sufficiently high accuracy - since these actions take place in a separate process - so that the afore-mentioned acoustic impedance of the spacing between the front portion 13 and the loudspeaker 10 may be kept within desired limits. The front portion 13 is mounted to a chassis rear portion 14, the separation line of which being indicated by the reference numeral 15 in FIG 1.

At its underside the loudspeaker 10 is provided with two connecting pins 11a, 11b, which are connected at their respective first ends to a respective input of the loudspeaker body portion. The loudspeaker as such is a common standard component of electrodynamic type, which for instance is available from KIRK A/S i Denmark and which, consequently, is not described in more detail here. Preferably, the connecting pins are made from a copper-base, which is covered with a relatively thick layer of nickel, that in turn is covered with a thin golden layer (approximately 1 µm thick), and furthermore the pins are about 2 mm wide, approximately 0,5 mm thick and extend almost 10 mm outside the circular loudspeaker.

The connector 20 is arranged between the connecting pins 11a, 11b of the loudspeaker 10 and a printed circuit board 12 mounted in the rear portion 14. A variety of electric or electronic circuits are provided on the printed circuit board 12, said circuits realizing the various functions of the radio telephone. For instance, the printed circuit board comprises a processor or CPU unit, which is not explicitly shown in the drawing and which controls the overall functions of the radio telephone. Furthermore, the printed circuit board 12 is provided with a transmitter/ receiver unit of conventional design for transmitting and receiving, respectively, electromagnetic radio-frequent signals. Such circuitry is regarded to be well-known to a man skilled in the technical field, and hence no detailed description is made here. However, the operation of the radio telephone will be briefly described below with respect to the reception of an incoming radio signal. The manufacture of the printed circuit board, as well as the mounting and the soldering of the circuits and components thereof, is essentially carried out in accordance with the corresponding information found in the Description of the Prior Art section.

An incoming radio-frequent electromagnetic signal, which for instance has been transmitted from a base station used in a cellular telecommunications system, will arrive at the radio telephone to be received by means of an antenna mounted to the radio telephone. The electromagnetic signal is converted by the antenna to a high-frequency electric signal, which once filtered and amplified will be mixed down to an intermediate frequency signal by means of a mixer unit. Then another filtering and amplifying step is carried out, followed by a demodulation of the signal in a demodulation unit by means of an intermediate frequency signal supplied by a local oscillator. Hereby, a so called baseband signal is obtained, which may be decoded or signal processed in accordance with methods and protocols of the cellular telecommunications system in question. A low-frequency electric signal thus obtained is then supplied to the loudspeaker 10 through an amplifier arrangement on the circuit board 12, the electric signal thereby being converted to acoustic sound waves radiating from the loudspeaker 10.

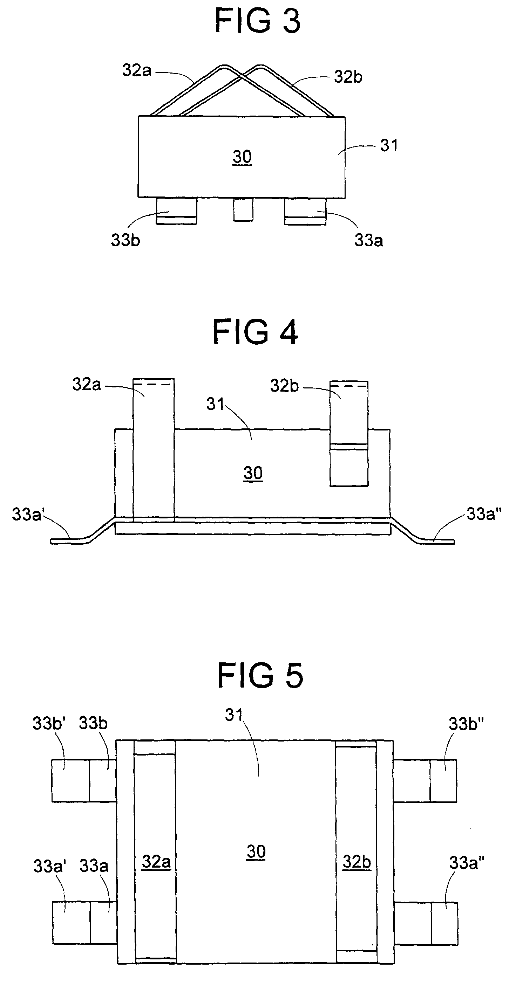

The connector 20 according to the invention will first be described on a fundamental basis according to FIGs 1 and 2. A more concrete design is then described with reference to the preferred embodiment shown in FIGs 3-5. The connector 20 comprises a connector body 21 made from an electrically isolating material with a high temperature resistance. At least an upper side and a bottom side of the contact body 21 are parallel to each other. Two resilient connecting elements 22a, 22b are according to FIGs 1 and 2 arranged at their first respective ends above the connector body 21 at the upper side thereof. As shown in FIGs 1 and 2 and as described in more detail below with reference to the preferred embodiment of the invention according to FIGs 3-5, each resilient connecting element 22a, 22b extends across the upper surface of the connector body 21, thereby forming an inverted V, which provides a resilient function fundamental to the invention. Also other, more obtuse designs of the resilient connecting elements 22a, 22b are possible.

The area between the two connecting elements 22a, 22b at the upper surface of the connector body 21 is large enough (at least about 3 mm x 3 mm) as well as plane enough for allowing the connector to be picked during an automatic assembly process described below. At their respective second ends the resilient connecting elements 22a, 22b are connected to a respective lower contact element 23a, 23b, which are arranged at the bottom side of the connector body 21 to be connected to the afore-mentioned amplifier arrangement on the printed circuit board 12. The upper resilient connecting elements 22a, 22b are, with respect to their design, identical to each other and are preferably essentially shaped as leaf springs, said leaf springs being made from an electrically conductive material with a spring force small enough so as to achieve the resilient effect against the connecting pins 11a, 11b of the loudspeaker 10, as described below. The two upper connecting elements are electrically isolated from each other, and so are the two lower contact elements. Preferably, the upper connecting elements are made from copper, which like the loudspeaker connecting pins 11a, 11b described above are covered with a protective nickel-based layer as well as with a thin outer layer of gold. However, it is to be understood that all of the contact means described above may be made from other materials and may be given other dimensions than the ones described here.

According to FIG 1 the resilient connecting element 22b is connected to the corresponding lower contact element 23b, the former being arranged to extend in a suitable way down through the connector body 21 along a groove or channel formed for this reason in the otherwise homogeneous connector body. Alternatively, the upper connecting element may extend along the outside of a vertical side surface of the connector body down to the corresponding lower contact element. The actual connection between the lower portion of the upper connecting element 22b and the lower contact element 23b may for instance be achieved by soldering or a form dependent engagement. The second upper connecting element 22a extends in the opposite direction through a corresponding groove or channel in the connector body 21 down to the lower contact element 23a, and the interconnection thereof is provided in a way similar to the one described above. In the fundamental illustration in FIGs 1 and 2 the connector 20 is shown in its depressed state, i.e. when the front portion 13 is mounted to the rear portion 14, the connecting pins 11a, 11b of the loudspeaker 10 mounted on the inside of the front portion resiliently engaging the upper resilient connecting elements 22a, 22b of the connector 20. In this way a satisfactory electric contact is achieved between the connecting pins 11a, 11b of the loudspeaker 10 and the upper resilient connecting elements 22a, 22b of the connector, said upper connecting elements in turn having electric contact with the printed circuit board 12 through the lower contact elements 23a and 23b, respectively.

In FIGs 3-5 a connector 30 according to a preferred embodiment of the invention is shown. As previously mentioned the connector body 31 consists of an electrically isolating material, which is capable of enduring the temperatures reached during the previously described manufacturing of the printed circuit board. A material suitable for the connector body 31 is the plastic material PPA, but also other materials may be used. The connector body 31 is homogeneous and is essentially shaped as a rectangular parallelepiped. According to the preferred embodiment an upper leaf-spring type connecting element 32a is formed as an integrated member together with a lower contact element 33a. The free end of the upper connecting element 32a is arranged to touch a longitudinal side of the upper surface of the connector body 31, when unloaded, while said free end, when loaded (i.e. when a loudspeaker connecting pin 11a according to the above is pressed against the connecting element 32a), contacts a groove or a recess, which is formed vertically or along a side surface of the connector body 31. The connector 30 is shown in its loaded state in FIGs 3-5, and it appears from FIG 4 in particular in what way the depressed upper connecting element 32b connects to a side surface of the connector body 31. Starting from this free end, each upper connecting element 32a, 32b extends in an obtuse-angled shape across the upper side of the connector body 31, and then extends vertically down the opposite side surface of the connector body 31 so as to connect to its respective lower contact element 33a, 33b.

The uppermost point of each respective upper connecting element 32a, 32b, i.e. the tip of the angular shape, is arranged to contact a respective loudspeaker connecting pin 11a, 11b, when the front portion 13 is mounted to the rear portion 14 and the resilient connecting elements 32a, 32b are depressed, as described above. The two upper connecting elements 32a, 32b are arranged in opposite directions with respect to each other across the upper side of the connector body 31, the free end of one connecting element 32a being located at an opposite side of the connector body 31 with respect to the other connecting element 32b. The spring stiffness of the resilient connecting elements 32a, 32b will have to be adapted to the force exerted by the respective loudspeaker connecting pin 11a, 11b on the respective connecting element 32a, 32b. According to a prototype of the preferred embodiment of the invention a spring force of about 60 ± 15 g has proven suitable.

The two lower contact elements 33a, 33b are firmly arranged on the bottom side of the connector body 31 along its longitudinal axis. The lower contact elements protrude from each side of the connector body, and according to FIG 4 these protruding ends are twice bent at an angle of approximately 45° so as to form the contact surfaces 33a', 33a", 33b', 33b". These contact surfaces are arranged to be soldered to the printed circuit board 12 for electrical interconnection between the loudspeaker 10 and an electric circuitry on the circuit board 12 through the connector according to the invention.

Thanks to the connector 20, 30 according to the invention it is possible to connect an electroacoustic transducer to an electric circuit board in a radio telephone with a high level of automatization, as will be described in the following. When the printed circuit board 12 is manufactured during a soldering process like the one previously described in section Description of the Prior Art, the connector 20 is surface-mounted at the proper location on the printed circuit board 12. Due to the plane upper side of the connector body 21, 31 the connector may be picked and mounted to the circuit board 12 in an automatic assembly process (a so-called "pick and place" process). Thanks to the symmetrical arrangement of the contact surfaces 33a', 33a", 33b', 33b" of the lower contact elements 33a, 33b, it makes no difference if the connector 20, 30 is rotated 180° during the automatic assembly process, and hence this assembly process may be carried out more easily. Then the circuit board may, together with the electric and electronic circuits and components mounted thereon as well as the connector 20, 30 provided thereon according to the above, be heat-treated in a hot-air furnace at such a high temperature, which is required for allowing the soldering process.

As previously described, the loudspeaker 10 is arranged together with its connecting pins 11a, 11b at the intended position on the inside of the front portion 13. Finally, the front portion and the rear portion 14 are brought together, the electric connection between the printed circuit board 12 and the loudspeaker 10 being established by means of the connecting pins 11a, 11b being pressed against the resilient upper connecting elements 22a, 22b; 32a, 32b.

Thanks to the arrangements described above satisfactory margins are achieved in all directions during the mounting of the connector 20; 30 on the printed circuit board 12, during the mounting of the loudspeaker 10 in the front portion 13 as well as during the assembly of the front portion 13 and the rear portion 14. In addition there is no longer any need for a manual operation so as to solder electric connector wires between the loudspeaker and the printed circuit board. The lack of such wire connections has the additional advantage of allowing the front portion 13 to be fully removable from the rear portion 14, when there is a need of doing so (such as service or repair of the radio telephone), without requiring any interruption of a fixed connection. Trials and calculations have proven that the spring arrangement withstands at least some fifty depressions, which by far should cover the entire operational life of the radio telephone, since it has to be regarded as highly unlikely, that the radio telephone will have to be opened for reasons such as service or repair more than a few times during its lifetime.

The above description of the invention and the preferred embodiment thereof has been carried out for examplifying but not limiting purposes. Hence, the invention may be realized in other ways than the ones described above within the scope of the appended patent claims. In particular, it should be noted, that even if the electroacoustic transducer has been described above as being an electrodynamic loudspeaker, the invention may be applied together with other kinds of loudspeakers as well as with microphones of various known designs.

## Claims

1. A connector for electrically connecting an electroacoustic transducer (10) to electric circuits on a printed circuit board (12) in a sound reproducing and/or sound recording device, the connector comprising:
a connector body (21; 31) of an electrically isolating material with a resistance against the high temperature reached during a soldering process;
a first and a second lower elongated contact element (23a, 23b; 33a, 33b), said contact elements being arranged at a bottom side of the connector body (21; 31) and being provided with at least one contact point (33a', 33", 33b', 33b") each for connection to said electric circuits on the printed circuit board (12); and
a first and a second resilient, elongated, upper connecting element (22a, 22b; 32a, 32b), each of which,at its first end, is connected to an upper side of the connector body (21; 31) parallel to said bottom side, is resilient in a vertical direction (10), and at its second end is connected to the first and the second lower contact element (23a, 23b; 33a, 33b), respectively;
**characterized in that**
the lower contact elements (23a, 23b; 33a, 33b) are symmetrically arranged, whereby each of the first and second lower contact element (23a, 23b; 33a, 33b) has a portion (33a', 33a", 33b', 33b"), which is parallel to said bottom side and which comprises said at least one contact point;
the first and second upper connecting element (22a, 22b; 32a, 32b) are symmetrically arranged, such that the first upper connecting element (22a; 32a) extends in parallel with and in a direction opposite to the second upper connecting element (22b; 32b); and
the connector body (21; 31) has a plane upper side surface between said first and second upper connecting elements (22a, 22b; 32a, 32b).

2. A connector according to claim 1,
**characterized in that** each upper connecting element (22a, 22b; 32a, 32b) forms an angular or bent shape protruding from the upper side of the connector body (21; 31).

3. A connector according to claim 1 or 2,
**characterized in that** the upper connecting elements (22a, 22b; 32a, 32b) are formed as leaf springs.

4. A method of assembling a radio telephone having an electroacoustic transducer (10) and electrical circuits on a printed circuit board (12), the radio telephone further comprising a front portion (13), to which the electroacoustic transducer (10) is mounted, and a rear portion (14), in which the printed circuit board (12) is arranged,
**characterized by** the steps of
a) providing an electrical connector
for electrically connecting the electroacoustic transducer (10) to the electric circuits, the connector having a connector body (21; 31) of an electrically isolating material with a resistance against the high temperature reached during a soldering process
a first and a second lower elongated contact element (23a, 23b; 33a, 33b), said contact elements being arranged at a bottom side of the connector body (21; 31) and being provided with at least one contact point (33a', 33", 33b', 33b") each for connection to said electric circuits on the printed circuit board (12); and
a first and a second resilient, elongated, upper connecting element (22a, 22b; 32a, 32b), each of which, at its first end, is connected to an upper side of the connector body (21; 31) parallel to said bottom side is resilient in a vertical direction (10), and at its second end is connected to the first and the second lower contact element (23a, 23b; 33a, 33b), respectively, whereby
the lower contact elements (23a,b; 33a,b) are symmetrically arranged, whereby each of the first and second lower contact element (23a, 23b; 33a, 33b) has a portion (33a', 33a", 33b', 33b"), which is parallel to said bottom side and which comprises said at least one contact point;
the first and second upper connecting element (22a, 22b; 32a, 32b) are symmetrically arranged, such that
the first upper connecting element (22a; 32a) extends in parallel with and in a direction opposite to the second upper connecting element (22b; 32b); and
the connector body (21; 31) has a plane upper side surface between said first and second upper connecting elements (22a, 22b; 32a, 32b);
b) soldering the connector at its contact points (33a', 33a", 33b', 33b") to the printed circuit board (12) in a heat-treatment process known per se carried out in a hot-air furnace at a temperature t₁, at the same time soldering the electric circuits to the printed circuit board,
c) mounting the printed circuit board in the rear portion (14),
d) mounting the electroacoustic transducer (10) to the front portion (13) according to any conventional mounting method at a temperature t₂, which is lower than the temperature t₁ according to a) and which is low enough not to damage the electroacoustic transducer,
e) mounting the front portion to the rear portion in such a way that the first and the second connecting pins (11a, 11b), respectively, of the electroacoustic transducer engages the first and the second upper connecting elements (22a, 22b; 32a, 32b), respectively, the electric interconnection thereof being maintained due to the resilient engagement of the upper connecting elements with the connecting pins.

## Patentansprüche

1. Ein Verbinder zum elektrischen Verbinden eines elektroakustischen Übertragers (10) mit elektrischen Schaltungen auf einer gedruckten Schaltplatte (12) in einer Klangwiedergabe- und/oder Klangaufzeichnungsvorrichtung, wobei der Verbinder umfasst:
einen Verbinderkörper (21; 31) aus einem elektrisch isolierenden Material mit einer Beständigkeit gegenüber der während eines Lötvorgangs erreichten hohen Temperatur;
ein erstes und ein zweites unteres längliches Kontaktelement (23a, 23b; 33a, 33b), wobei die Kontaktelemente auf einer Unterseite des Verbinderkörpers (21; 31) angeordnet sind und mit mindestens einem Kontaktpunkt (33a', 33a'', 33b', 33b'') ausgestattet sind, jeweils für eine Verbindung mit den elektrischen Schaltungen auf der gedruckten Schaltplatte (12); und
ein erstes und zweites elastisches, längliches, oberes Verbindungselement (22a, 22b; 32a, 32b), wobei jedes mit seinem ersten Ende mit einer oberen Seite des Verbinderkörpers (21; 31) parallel zu der Unterseite verbunden ist, in einer vertikalen Richtung elastisch ist, und jedes an seinem zweiten Ende mit dem ersten bzw. dem zweiten unteren Kontaktelement (23a, 23b; 33a, 33b) verbunden ist;
**dadurch gekennzeichnet, dass**
die unteren Kontaktelemente (23a, 23b; 33a, 33b) symmetrisch angeordnet sind, wobei das erste und zweite untere Kontaktelement (23a, 23b; 33a, 33b) einen Abschnitt (33a', 33a"; 33b', 33b'') aufweist, der parallel zu der Unterseite ist und mindestens einen Kontaktpunkt aufweist;
das erste und zweite obere Verbindungselement (22a, 22b; 32a, 32b) symmetrisch angeordnet sind, so dass das erste obere Verbindungselement (22a; 32a) sich parallel zu und in einer Richtung gegenüberliegend dem zweiten oberen Verbindungselement (22b; 32b) erstreckt; und
der Verbindungskörper (21; 31) eine ebene obere Seitenoberfläche zwischen dem ersten und zweiten oberen Verbindungselement (22a, 22b; 32a, 32b) aufweist.

2. Ein Verbinder gemäß Anspruch 1, **dadurch gekennzeichnet, dass** jedes obere Verbindungselement (22a, 22b; 32a, 32b) eine gewinkelte oder gebogene Form bildet, die aus der oberen Seite des Verbinderkörpers (21; 31) hervorsteht.

3. Ein Verbinder nach Anspruch 1 oder 2, **dadurch gekennzeichnet, dass** die oberen Verbindungselemente (22a, 22b; 32a, 32b) als Blattfedern ausgebildet sind.

4. Ein Verfahren zum Anordnen eines Funktelefons mit einem elektroakustischen Übertrager (10) und elektrischen Schaltungen auf einer gedruckten Schaltplatte (12), wobei das Funktelefon weiter einen Vorderabschnitt (13) umfasst, an dem der elektroakustische Übertrager (10) befestigt ist, und einen rückwärtigen Abschnitt (14), an dem die gedruckte Schaltplatte (12) angeordnet ist,
**gekennzeichnet durch** die Schritte
a) Bereitstellen eines elektrischen Verbinders zum elektrischen Verbinden des elektroakustischen Übertragers (10) mit den elektrischen Schaltungen, wobei der Verbinder einen Verbinderkörper (21; 31) aus einem elektrisch isolierenden Material aufweist, mit einer Beständigkeit gegenüber der hohen Temperatur, die während eines Lötvorgangs erreicht wird;
ein erstes und zweites längliches unteres Kontaktelement (23a, 23b; 33a, 33b), wobei die Kontaktelemente auf einer Unterseite des Verbinderkörpers (21; 31) angeordnet sind und mit mindestens einem Kontaktpunkt (33a', 33a''; 33b', 33b'') ausgestattet sind, jeweils für eine Verbindung mit den elektrischen Schaltungen auf der gedruckten Schaltplatte (12); und
ein erstes und ein zweites elastisches, längliches, oberes Verbindungselement (22a, 22b; 32a, 32b), die am jeweiligen ersten Ende mit einer Oberseite des Verbinderkörpers (21; 31) verbunden sind, parallel zu der Unterseite, elastisch in einer vertikalen Richtung sind, und am jeweiligen zweiten Ende mit dem ersten bzw. zweiten unteren Kontaktelement (23a, 23b; 33a, 33b) verbunden sind,
wobei die unteren Kontaktelemente (23a, b; 33a, b) symmetrisch angeordnet sind, wobei das erste und zweite untere Kontaktelement (23a, 23b; 33a, 33b) jeweils einen Abschnitt (33a', 33a"; 33b', 33b'') aufweist, der parallel zu der Unterseite verläuft, und der mindestens einen Kontaktpunkt umfasst;
wobei das erste und zweite obere Verbindungselement (22a, 22b; 32a, 32b) symmetrisch angeordnet sind, so dass sich das erste obere Kontaktelement (22a; 32a) parallel zu und in einer Richtung gegenüberliegend zu dem zweiten oberen Kontaktelement (22b; 32b) erstreckt; und
der Verbinderkörper (21; 31) zwischen dem ersten und zweiten Verbindungselement (22a, 22b; 32a, 32b) eine ebene obere Oberfläche aufweist;
b) Löten des Verbinders mit seinen Kontaktpunkten (33a', 33a"; 33b', 33b'') an die gedruckte Schaltplatte (12) in einem an sich bekannten Wärmebehandlungsvorgang, der in einem Heißluftofen auf einer Temperatur t1 durchgeführt wird, und gleichzeitig Löten der elektrischen Schaltungen auf die gedruckte Schaltplatte,
c) Befestigen der gedruckten Schaltplatte in dem rückwärtigen Abschnitt (14),
d) Befestigen des elektroakustischen Übertragers (10) an den Vorderabschnitt (13) in Übereinstimmung mit einem beliebigen bekannten Befestigungsverfahren bei einer Temperatur t2, die niedriger als die Temperatur t1 gemäß a) ist, und die niedrig genug ist, den elektroakustischen Übertrager nicht zu beschädigen,
e) Befestigen des Vorderabschnitts an dem rückwärtigen Abschnitt auf solche Weise, dass der erste bzw. der zweite Verbindungsstift (11a, 11b) des elektroakustischen Übertragers in das erste bzw. zweite obere Verbindungselement (22a, 22b; 32a, 32b) eingreift, wobei die elektrische Verbindung davon aufgrund des federnden Eingriffs der oberen Verbindungselemente mit den Verbindungsstiften aufrechterhalten wird.

## Revendications

1. Connecteur pour connecter électriquement un transducteur électro-acoustique (10) à des circuits électriques sur une plaquette (12) à circuits imprimés dans un dispositif de reproduction de sons et/ou d'enregistrement de sons, le connecteur comportant :
un corps (21 ; 31) de connecteur en matière électriquement isolante ayant une résistance à la haute température atteinte pendant un processus de soudage ;
des premier et second éléments allongés inférieurs de contact (23a, 23b ; 33a, 33b), lesdits éléments de contact étant agencés à un côté inférieur du corps (21 ; 31) du connecteur et étant pourvus d'au moins un point de contact (33a', 33", 33b', 33b") chacun pour une connexion sur lesdits circuits électriques sur la plaquette (12) à circuits imprimés ; et
des premier et second éléments supérieurs allongés et élastiques (22a, 22b ; 32a, 32b) de connexion, dont chacun, à sa première extrémité, est connecté à un côté supérieur du corps (21 ; 31) du connecteur parallèle audit côté inférieur, est élastique dans une direction verticale, et est connecté par sa seconde extrémité aux premier et second éléments inférieurs de contact (23a, 23b ; 33a, 33b), respectivement ;
**caractérisé en ce que**
les éléments de contact inférieurs (23a, 23b ; 33a, 33b) sont agencés symétriquement, grâce à quoi chacun des premier et second éléments de contact inférieurs (23a, 23b ; 33a, 33b) comporte une partie (33a', 33a", 33b', 33b") qui est parallèle audit côté inférieur et qui comporte ledit, au moins un, point de contact ;
les premier et second éléments supérieurs de connexion (22a, 22b ; 32a, 32b) sont agencés symétriquement, de manière que le premier élément supérieur de connexion (22a ; 32a) s'étende parallèlement au, et dans un sens opposé à celui du, second élément supérieur de connexion (22b ; 32b) ; et
le corps (21 ; 31) du connecteur présente une surface plane d'un côté supérieur entre lesdits premier et second éléments de connexion supérieurs (22a, 22b ; 32a, 32b).

2. Connecteur selon la revendication 1,
**caractérisé en ce que** chaque élément supérieur de connexion (22a, 22b ; 32a, 32b) forme une configuration angulaire ou coudée faisant saillie du côté supérieur du corps (21 ; 31) du connecteur.

3. Connecteur selon la revendication 1 ou 2,
**caractérisé en ce que** les éléments supérieurs de connexion (22a, 22b ; 32a, 32b) sont réalisés sous la forme de ressorts plats.

4. Procédé d'assemblage d'un radiotéléphone ayant un transducteur électro-acoustique (10) et des circuits électriques sur une plaquette (12) à circuits imprimés, le radiotéléphone comportant en outre une partie avant (13), sur laquelle le transducteur électro-acoustique (10) est monté, et une partie arrière (14), dans laquelle la plaquette (12) à circuits imprimés est agencée, **caractérisé par** les étapes dans lesquelles :
a) on se procure un connecteur électrique pour connecter électriquement le transducteur électro-acoustique (10) aux circuits électriques, le connecteur ayant un corps (21 ; 31) de connecteur en matière électriquement isolante présentant une résistance à la température élevée atteinte pendant un processus de soudage ;
des premier et second éléments allongés inférieurs (23a, 23b ; 33a, 33b) de contact, lesdits éléments de contact étant agencés à un côté inférieur du corps (21 ; 31) du connecteur et étant pourvus d'au moins un point de contact (33a', 33", 33b', 33b") chacun pour une connexion sur lesdits circuits électriques sur la plaquette (12) à circuits imprimés ; et
des premier et second éléments supérieurs allongés et élastiques (22a, 22b ; 32a, 32b) de connexion, dont chacun, à sa première extrémité, est connecté à un côté supérieur du corps (21 ; 31) du connecteur parallèle audit côté inférieur, est élastique dans une direction verticale (10) et est connecté par sa seconde extrémité aux premier et second éléments inférieurs (23a, 23b ; 33a, 33b) de contact, respectivement, grâce à quoi
les éléments inférieurs (23a,b ; 33a,b) de contact sont agencés symétriquement, de manière que chacun des premier et second éléments inférieurs (23a, 23b ; 33a, 33b) de contact comporte une partie (33a', 33", 33b', 33b") qui est parallèle audit côté inférieur et qui comporte ledit, au moins un, point de contact ;
les premier et second éléments supérieurs (22a, 22b ; 32a, 32b) de connexion sont agencés symétriquement, afin que le premier élément supérieur (22a ; 32a) de connexion s'étende parallèlement au, et dans un sens opposé à celui du, second élément supérieur de connexion (22b ; 32b) ; et
le corps (21 ; 31) du connecteur présente une surface plane d'un côté supérieur entre lesdits premier et second éléments supérieurs (22a, 22b ; 32a ; 32b) de connexion ;
b) on soude le connecteur par ses points de contact (33a', 33a", 33b', 33b") à la plaquette (12) à circuits imprimés dans un processus de traitement thermique connu en soi, exécuté dans un four à air chaud à une température t₁, en même temps qu'on soude les circuits électriques à la plaquette à circuits imprimés,
c) on monte la plaquette à circuits imprimés dans la partie arrière (14),
d) on monte le transducteur électro-acoustique (10) sur la partie avant (13) conformément à un procédé de montage classique quelconque, à une température t₂, qui est inférieure à la température t₁ selon a) et qui est suffisamment basse pour ne pas endommager le transducteur électro-acoustique,
e) on monte la partie avant sur la partie arrière d'une manière telle que les première et seconde broches de connexion (11a, 11b), respectivement, du transducteur électro-acoustique engagent les premier et second éléments supérieurs (22a, 22b ; 32a, 32b) de connexion, respectivement, leur interconnexion électrique étant maintenue du fait de l'engagement élastique des éléments supérieurs de connexion avec les broches de connexion.
